Europäisches Patentamt

European Patent Office

Office européen des brevets

(11) Publication number: 0 547 743 A2

# EUROPEAN PATENT APPLICATION

(21) Application number: 92308804.1

(22) Date of filing: 28.09.92

(51) Int. Cl.⁵: **C08G 18/61**, C08G 18/65

(30) Priority: 16.12.91 US 807343

(43) Date of publication of application:
23.06.93 Bulletin 93/25

(84) Designated Contracting States:
**DE FR GB IT**

(71) Applicant: **TEXACO CHEMICAL COMPANY**
**3040 Post Oak Boulevard**
**Houston, Texas 77056(US)**

(72) Inventor: **Grigsby, Robert Allison, Jr.**
**7404 Fireoak Drive**
**Austin, Texas 78759(US)**
Inventor: **Rice, Doris Marvin**
**6008 Danwood Drive**
**Austin, Texas 78759(US)**

(74) Representative: **Brock, Peter William et al**
**UROUHART-DYKES & LORD 91 Wimpole**
**Street**
**London W1M 8AH (GB)**

(54) **Amino polysiloxane based polymers.**

(57) Polymers having urea groups can be obtained by reacting an organic polyisocyanate with an active hydrogen-containing main component and an active hydrogen-containing cross-linker, wherein the active-hydrogen containing main component comprises an aminopolysiloxane having a number average molecular weight of at least 1,500 wherein the aminopolysiloxane contributes more than fifty percent of the active hydrogens reacting with the polyisocyanate from active hydrogen-containing components having a molecular weight above 1,000.

EP 0 547 743 A2

This invention concerns polymers made from organic polyisocyanates and amino polysiloxanes.

US-A-4396729, US-A-4444910 and US-A-4433067 concern elastomers prepared from a high molecular weight amine-terminated polyether, an aromatic diamine chain extender, and an aromatic polyisocyanate, which may be a simple polyisocyanate or a quasi-prepolymer prepared by reacting a polyol with excess polyisocyanate so that some isocyanate groups are still unreacted. The above-mentioned patents state that certain aliphatic amine chain extender materials are disclosed in US-A-4246363 and US-A-4269945 (see below) may also be used.

US-A-3523918 describes the use of amine chain extenders for the preparation of integral skin foams. US-A-4218543 describes the use of high molecular weight polyols, certain aromatic diamines, and isocyanates for the production of RIM parts.

US-A-4246363 claims a RIM polyurethane composition derived using at least three different polyols (some are actually amine cross-linkers, both aliphatic and aromatic, having specific relationships and reactivity and solubility parameters to one another). Also, US-A-4269945 claims a process for preparing RIM polyurethanes wherein a relatively high molecular weight hydroxyl-containing polyol, a chain extender and a polyisocyanate are used.

US-A-4546154 and US-A-4764330 describe polyurethane, polyurea and polyurea urethane resins having improved mould release properties made by including in the formulation certain internal mould release agents, which are polysiloxane polymers having pendent organic groups which contain at least one hydroxyl, amino or mercapto group. The polysiloxane polymers containing amino groups are those which are used according to the present invention.

This invention relates to a process for the production of a polymer by reacting an organic polyisocyanate with an active hydrogen-containing main component and an active hydrogen-containing cross-linker, in which the active-hydrogen containing main component comprises an aminopolysiloxane having a number average molecular weight of at least 1,500, wherein the aminopolysiloxane contributes more than fifty percent of the active hydrogens reacting with the polyisocyanate from active hydrogen-containing components having a number average molecular weight above 1,000.

The amino-polysiloxane may have at least one group of the formula

RNH-alkylene-O-    (I)

bonded to a silicon atom of a polysiloxane, wherein R is hydrogen, $C_1$-$C_8$ alkyl, cycloalkyl, or ECHR''CHR'-, wherein E is an electron-withdrawing group, and R' and R'' are independently hydrogen or methyl, said amino-polysiloxane being substantially free of any acid salt thereof.

While the polysiloxane should contain at least one group of formula (I), it preferably contains from 2 to 4 such groups.

The term, "electron withdrawing group" means a group capable of attracting electrons, and includes -CN, -COOR, -CONH$_2$, -NO$_2$, -SOR, and SO$_2$R, wherein R has the definition set forth above, except for the exclusion of hydrogen.

The term "alkylene" means straight or branched chain alkylene having 1 to 8 carbon atoms, such as methylene, ethylene, propylene, butylene, pentylene, hexylene, heptylene, octylene, and isomeric forms thereof.

The term "alkyl" means lower or branched alkyl having from 1 to 8 carbon atoms, such as methyl, ethyl, propyl, butyl, pentyl, hexyl, heptyl, octyl, and isomeric forms thereof.

The term "aryl" means the radical obtained by removing one nuclear hydrogen atom from an aromatic hydrocarbon having from 6 to 12 carbon atoms, and includes phenyl, tolyl, xylyl, naphthyl and biphenylyl.

The term "cycloalkyl" means the radical obtained by removing one hydrogen atoms from a ring carbon atom of a cycloaliphatic hydrocarbon having 3 to 6 carbon atoms, and includes cyclopropyl, cyclobutyl, cyclopentyl, cyclohexyl and methylcyclohexyl.

The balance of the active hydrogen molecular weight materials above 1000 molecular weight may be polyols, amine terminated polyols or variations of the above, preferably with functionalities from 2 to 3 and a preferred molecular weight from 1500 to 8000.

A preferred group of polyols comprises propyleneoxy-polyethyleneoxy diols and triols obtained by the alkoxylation of a suitable initiator, such as water, ammonia, ethylene glycol, propylene glycol, trimethylolpropane, aniline, or ethanolamine; polyester diols obtained from the reaction of dibasic carboxylic acids, such as succinic, adipic, suberic, azelaic, phthalic, or isophthalic acid, with alkylene glycols, or oxyalkylene glycols, to form the corresponding polyoxyalkylene, or polyoxyalkylene ester diols or copolymers thereof; and vinyl-resin reinforced propyleneoxy-ethyleneoxy capped diols and triols.

The amine terminated polyethers useful in this invention include primary and secondary amine terminated polyether polyols of greater than 1,500 average molecular weight, having from 2 to 6 functionality, preferably from 2 to 3, and an amine equivalent weight from 750 to 4,000. Mixtures of amine terminated polyethers may be used. In a preferred embodiment, the amine terminated polyethers have an average molecular weight of at least 2,500.

The amine terminated polyether resins useful in this invention are polyether resins made from an appropriate initiator to which are added lower alkylene oxides, such as ethylene oxide, propylene oxide, butylene oxide or mixtures thereof, with the resulting hydroxyl terminated polyol then being aminated. When two or more oxides are used, they may be present as random mixtures or as blocks of one or the other polyether. In the amination step, it is highly desirable that the terminal hydroxyl groups in the polyol are essentially all secondary hydroxyl groups, for ease of amination. Normally, the amination step does not completely replace all the hydroxyl groups, but the majority of hydroxyl groups are replaced by amine groups.

The chain extenders useful in this invention include, for example, 1-methyl-3,5-diethyl-2,4-diaminobenzene, 1-methyl-3,5 diethyl-2-6 diaminobenzene (both of these materials are also called diethyltoluene diamine or DETDA), 1,3,5-triethyl-2,6 diaminobenzene; and 3,5,3', 5'-tetraethyl-4,4'' diaminodiphenylmethane. Particularly preferred aromatic diamine chain extenders are 1-methyl-3,5-diethyl-2,4 diaminobenzene or a mixture of this compound with 1-methyl-3,5-diethyl-2,6 diaminobenzene. It is within the scope of this invention to include some aliphatic chain extender materials, as described in US-A-4246363 and US-A-4269945.

Also, illustrative of the extenders, but not limiting, are alkylene diols, such as ethylene glycol, 1,3-propylene glycol, 1,2-propylene glycol, 1,4-butanediol, 1,2-hexanediol, and neopentyl glycol; oxyalkylene diols, such as diethylene glycol and dipropylene glycol; and dihydroxyalkylated aromatic compounds, such as the bis(2-hydroxyethyl)ethers of hydroquinone and resorcinol; p-xylene-α,α'-diol; the bis(2-hydroxyethyl) ether of p-xylene-α,α'-diol; m-xylene-α,α'-diol and the bis(2-hydroxyethyl)ether thereof; and aromatic diamines, such as 1,3-diethyl-2,4-diaminobenzene, 2,4-diaminomesitylene, 1-methyl-3,5-diethyl-2,4-diaminobenzene, 1-methyl-3,5-diethyl-2,6-diaminobenzene, and 3,3',5,5'-tetraisopropyl-4,4'diaminodiphenylmethane.

Particularly useful as chain extenders are those having 2 or more hydrogen atoms reactive with isocyanate. Particularly preferred are the difunctional extenders. Typical extender classes are the low molecular weight diols, diamines, and amine alcohols having a molecular weight from 60 to 400, and mixtures of any of the above types of extenders.

The organic polyisocyanates to be used in accordance with the present invention can be any of the organic diisocyanates, or higher functional polyisocyanates known to those skilled in the polyurethane art, and may be aliphatic, cycloaliphatic, aromatic, or heterocyclic polyisocyanates.

A wide variety of aromatic polyisocyanates may be used here. Typical aromatic polyisocyanates include p-phenylene-diisocyanate, 2,6-toluenediisocyanate, dianisidinediisocyanate, bitolylenediisocyanate, naphthalene-1,4-diisocyanate, bis(4-isocyanatophenyl) methane, bis(3-methyl-isocyanatophenyl)methane, bis(3-methyl-4-isocyanatophenyl)methane, and 4,4'-diphenylpropane-diisocyanate.

Other aromatic polyisocyanates used in the practice of the invention are methylene-bridged polyphenyl polyisocyanate mixtures which have a functionality of 2 to 4. These latter isocyanates are generally produced by the phosgenation of corresponding methylene-bridged polyphenyl polyamines, which are conventionally produced by the reaction of formaldehyde and primary aromatic amines, such as aniline, in the presence of hydrochloric acid and/or other acidic catalysts. Known processes for preparing polyamines and corresponding methylene-bridged polyphenyl polyisocyanates therefrom are described, for example, in US-A-2683730, US-A-2950263, US-A-3012008, US-A-3344162, and US-A-3362979.

Usually methylene-bridged polyphenyl polyisocyanate mixtures contain 20 to 100 weight percent of methylene diphenyldiisocyanate isomers, with the remainder being polymethylene polyphenyl diisocyanates having higher functionalities and higher molecular weights. Typical of these are polyphenyl polyisocyanate mixtures containing 20 to 100 weight percent of methylene diphenyldiisocyanate isomers, of which 20 to 95 weight percent thereof is the 4,4'-isomer, with the remainder being polymethylene polyphenyl polyisocyanates of higher molecular weight and functionality that have an average functionality of from 2.1 to 3.5. These isocyanate mixtures are known, commercially available materials and can be prepared by the process described in US-A-3362979.

By far the most preferred aromatic polyisocyanate is methylene bis(4-phenylisocyanate) or MDI, for example, in the form of pure MDI, quasi-prepolymers of MDI, and modified pure MDI, etc. Materials of this type may be used to prepare suitable RIM elastomers. Since pure MDI is a solid and is often inconvenient to use, liquid products based on MDI are often used and are included in the scope of the terms MDI or methylene bis(4-phenylisocyanate) used herein. US-A-3394164 discloses an example of a liquid MDI product. More generally, uretonimine-modified pure MDI is also included. This is made by heating pure distilled MDI in the presence of a catalyst. The liquid product is a mixture of pure MDI and modified MDI, and is described in US-A-4433067. Examples of commercial materials of this type are Dow's ISONATE® 125m (pure MDI) and ISONATE 143L ("Liquid" MDI). Preferably, the amount of isocyanates used is the stoichiometric amount, based on all the ingredients in the formulation, or may be greater than the stoichiometric amount.

In one embodiment of the present invention, a urethane-forming catalyst is present when polyurethane-forming ingredients are selected.

Any of the catalysts conventionally employed in the art to catalyze the reaction of an isocyanate with itself and/or with a reactive hydrogen-containing compound, including those disclosed in the above-mentioned patents, can be employed for this purpose.

The preferred urethane catalysts are organometallic compounds, and particularly the dialkyltin salts, such as dibutyltin compounds.

The amount of catalyst employed can vary considerably, according to the particular reactants in the polymer-forming mixture, and the particular catalyst involved. Optimum catalyst concentration is easily determined, using trial and error tests, by one skilled in the art. Generally speaking, the catalyst or mixture of catalysts will be employed in an amount of 0.01 to 5.0 percent by weight, preferably from 0.02 to 3.0 percent, most preferably from 0.05 to 0.5 percent, based on the total weight of isocyanate, polyol, and extender.

When only amine-terminated materials are chosen to react with the isocyanate, a catalyst may not be required.

Optionally, blowing agents may be employed when compact tough-skinned surfaces are desired. Any blowing agents known to those skilled in the art can be used, including water, and fluorocarbon blowing agents. The latter are preferred, and generally are halogenated aliphatic hydrocarbons which can be also substituted by chlorine and/or bromine in addition to the fluorine content, see US-A-3745133, column 11, lines 25 to 38.

Also, inert gases (e.g. nitrogen) may be introduced at the polymer-forming stage, to provide whatever degree of blowing is desired to produce products ranging from micro-cellular to macro-cellular in nature.

Other optional additives such as dispersing agents, cell stabilisers, surfactants, flame retardants, and colorants, can be added to the polyurethane polymers in accordance with the present invention.

The polymers of the present invention may be made, for example, by foaming, spraying or moulding, including the Reaction Injection Moulding (RIM) process.

The following examples illustrate our invention.

EXAMPLES

Example 1

Preparation of the Standard Quasi-Prepolymer

The general preparation of the standard prepolymer is as follows:
Thanol® SF-5505 (91 Kg) was added to a drum containing ISONATE® 143L (136 Kg). The contents of the drum were rolled for several hours.

Example 2

Preparation of Polyurea RIM Elastomers

DETDA (13.0 pbw) and Silicone Fluid F-881E (amino-terminated poly-dimethylsiloxane of about 22,222 molecular weight) (41.47 pbw) were charged into the B-component working tank of an Accuratio RIM machine. The contents of the tank were heated to 64°C. The A-tank on the RIM machine was charged with standard quasi-prepolymer (40.38 pbw) and heated to 53°C. The components were pressurized to 15.6 MPa on the A side and 16.5 MPa on the B side and injected into a clean flat plaque mould (457 x 457 x 3 mm) which had been preheated to 152°C. The part was removed from the mould in 30 seconds. The resulting elastomer was post-cured at 155°C for thirty minutes. Physical properties of the elastomer are listed in Table 1.

4

Example 3

DETDA (13.71 pbw) and JEFFAMINE® T-5000 (46.63 pbw) were charged into the B-component working tank of an Accuratio RIM machine. The contents of the tank were heated to 48°C. The A-tank of the RIM machine was charged with standard quasi-prepolymer (48.06 pbw) and heated to 47°C. The components were pressurized to 13.9 MPa on the A side and 12.5 MPa on the B side and injected into a clean flat plaque mould (457 x 457 x 3 mm) which had been preheated to 83°C. After 30 seconds, the mould was opened and the part was removed. Physical properties of the elastomer made at 83°C and post-cured at 155°C are listed in Table 1.

Example 4

DETDA (9.09 pbw) and JEFFAMINE® T-5000 (30.91 pbw) were charged into the B-component working tank of an Accuratio RIM machine. The contents of the tank were heated to 48°C. The A-tank on the RIM machine was charged with the standard quasi-prepolymer (31.86 pbw) and heated to 47°C. The components were pressurized to 14.9 MPa on the A side and 13.5 MPa on the B side and injected into a clean flat plaque mould (457 x 457 x 3 mm) which had been preheated to 149°C. After 30 seconds, the mould was opened and the part was removed. The part would not release from the mould without using an external mould release agent, soap, on the mould. Physical properties of the elastomer made at 149°C and post-cured at 155°C are listed in Table 1.

## TABLE 1

| Formulation pbw, | Examp. 2 | Examp. 3 | Examp. 4 |
|---|---|---|---|
| DETDA | 13.0 | 13.71 | 9.09 |
| JEFFAMINE® T-5000 | - | 46.63 | 30.91 |
| F-881E® | 41.47 | - | |
| Quasiprepolymer | 40.38 | 48.06 | 31.86 |
| Hard Block Content[x], % | 39.25 | 39.25 | 39.25 |
| Physical Properties: | | | |
|   Shore D | 53/49 | 63/59 | 55/45 |
|   Tensile, MPa | 16.1 | 21.6 | 18.3 |
|   Ult. elong., % | 45 | 230 | 275 |
|   Tear, N/m | 494 | 832 | 697 |
| Flexural Modulus, MPa | | | |
|   25°C | 392.3 | 207.4 | 116.4 |
|   14°C | 321.0 | 157.4 | 94.9 |
|   -29°C | 517.7 | 332.3 | 180.0 |
| Heat sag, 30 min., 150 mm OH), mm | | | |
|   155°C | 5 | 24.5 | 33.3 |
|   177°C | 9.5 | - | 56.3 |
|   204°C | 21.5 | - | - |

[x]Hard Block =

$$\frac{\text{Weight of (isocyanate + chain extender)} \times 100}{\text{Weight of (isocyanate + chain extender + polyol)}}$$

| | GLOSSARY OF TERMS AND MATERIALS |
|---|---|
| ISONATE® 125 | Pure MDI (4,4' diphenylmethane diisocyanate), a product of Dow Chemical Company |
| ISONATE® 143L | Carbodiimide modified liquid MDI, a product of Dow Chemical Company |
| JEFFAMINE® T-5000 | Polypropylene oxide triamine of about 5,000 molecular weight, a product of Texaco Chemical Company |
| DETDA | Diethyltoluene diamine |
| THANOL® SF-5505 | A 5500 molecular weight polyether triol containing approximately 80% primary hydroxyl groups, a product of Eastman Chemical Company |
| Silicone Fluid F-881E | Amino-terminated polydimethyl siloxane of about 22,222 molecular weight. Product of SWS Siloxane Corporation |

## Claims

1. A process for the production of a polymer comprising reacting an organic polyisocyanate with an active hydrogen-containing main component and an active hydrogen-containing cross-linker, characterised in that the active-hydrogen containing main component comprises an aminopolysiloxane having a number average molecular weight of at least 1,500 wherein the aminopolysiloxane contributes more than fifty percent of the active hydrogens reacting with the polyisocyanate from active hydrogen-containing components having a molecular weight above 1,000.

2. A process according to Claim 1 characterised in that the cross-linker is amine terminated.

3. A process according to Claim 2 characterised in that the cross-linker is diethyltoluene diamine.

4. A process according to any one of Claims 1 to 3 characterised in that the aminopolysiloxane contains at least one group of the formula

    RNH-alkylene-O-

7

bonded to a silicon atom of a polysiloxane, wherein alkylene is a straight or branched chain alkylene group having 1 to 8 carbon atoms, R is hydrogen, $C_1$-$C_8$ alkyl, $C_3$-$C_6$ cycloalkyl, or $ECHR''CHR'$- wherein E is an electron-withdrawing group, and R' and R'' are independently hydrogen or methyl, said aminopolysiloxane being substantially free of any acid salt thereof.

5. A process according to Claim 4 characterised in that E is a group of the formula -CN, -COOR, -CONH$_2$, -NO$_2$, -SOR or -SO$_2$R, wherein R has the meaning given in Claim 4 with the exception of hydrogen.

6. A process according to any one of Claims 1 to 5 characterised in that the active hydrogen-containing main component also includes a polyol or amine-terminated polyol having a functionality from 2 to 3 and a number average molecular weight from 1,500 to 8,000.

7. A process according to any one of Claims 1 to 6 characterised in that the polyisocyanate, the active hydrogen-containing main component and the cross-linker are reacted in a closed mould to form a reaction injection moulded elastomer.